# EUROPEAN PATENT SPECIFICATION

(11) **EP 1 756 419 B1**
(45) Date of publication and mention of the grant of the patent: **25.06.2008**
(21) Application number: 05733996.2
(22) Date of filing: 09.05.2005
(51) Int. Cl.: F03B 13/18

(54) **MODULAR SYSTEM FOR THE ELECTRIC ENERGY PRODUCTION FROM WAVE MOTION**
MODULARES SYSTEM FÜR DIE HERSTELLUNG VON ELEKTRISCHER ENERGIE AUS WELLENBEWEGUNG
SYSTEME MODULAIRE DESTINE A LA PRODUCTION D'ENERGIE ELECTRIQUE A PARTIR D'UN MOUVEMENT ONDULATOIRE

(30) Priority: 10.05.2004 IT RM20040228
(43) Date of publication of application: 28.02.2007
(73) Proprietor: Irti, Maria Giuliana, 67100 L'Aquila (IT); Vittorini, Enrico, 67100 L'Aquila (IT)
(72) Inventor: Irti, Maria Giuliana, 67100 L'Aquila (IT); Vittorini, Enrico, 67100 L'Aquila (IT)
(74) Representative: Papa, Elisabetta
(86) International application number: PCT/IB2005/051507
(87) International publication number: WO 2005/108778

(56) References cited:
- DE-A1- 2 514 447
- DE-U1- 20 117 211
- FR-A- 2 334 840
- US-A- 657 355
- US-A- 693 369
- US-A- 1 523 031
- US-A- 5 461 862

## Description

The present invention generally relates to an energy conversion system, and more specifically to a modular system for the electric energy production via the exploiting of the natural motion of sea and ocean waves.

This system finds application in the energy production field via the exploiting of renewable and potentially limitless natural resources.

The unavoidable gradual depletion of fossil fuels spurred the proposal of novel and improved methods for the energy production.

An interesting source of energy that, owing to its inherent features and ample availability, could solve the issues posed by the scantiness of resources, is definitely that linked to the unceasing motion of sea and ocean waves.

In the present state of the art, attempts have been made to harness the energy generated by wave motion and produce electric energy from the hydro-mechanical forces resulting from motion of waves on the sea surface.

The approaches adopted in conceiving and making the systems for exploiting wave motion for the electric energy production are basically two, and they differ depending on the fact that a fluid be used for said electric energy production, or that reliance upon mechanic solutions be total, e.g., resorting to mere crank gears.

Generally, however, both approaches entail an immediate transformation of the extracted hydro-mechanical energy into electric energy. Such a procedure results in a serious influencing of the outputtable produced power, as the capacity of the system remains directly bound to the forces carried on by the wave motion.

Typically, wave motion induces the motion of devices apt to transfer their mechanic energy, with or without the aid of fluids, for the driving of energy-converting apparatuses, optionally following intermediate steps, e.g. of mechanic conversion of said motion from reciprocating translatory to rotary.

DE 201 17 211 U discloses a wave energy conversion mechanism, in which a piston is driven by wave moment, said piston pumping water into a tank, and a turbine being driven by water from said tank.

More specifically, even when suitably channelled, conveyed or forced fluids are resorted to, there are issues related to the immediate marked dependence on the contingent situation of the sea surface and to the need of a direct conversion of energy.

In this regard, a known example of electric energy production system from wave motion is that envisaging the exploiting of channels and cavities, with an undersea inlet and an in-atmosphere outlet, to convey the force of the waves breaking on the shores.

In particular, the pressure wave induced thereby inside the channels or cavities provides the thrust required to move the vanes of an impeller connected to a power generator.

A further known example is that of a system in which sea water, by virtue of wave motion, falls in containers connected to machines equipped with blading, so as to drive the rotation of the latter, with an entailed electric energy production.

Waterfall systems exploiting the potential energy of water collected by blading rotation are equally common in the state of the art.

All these systems are subjected to the mentioned drawbacks of instant dependence on sea conditions for the energy production and/or, in particular in the case of the latter two examples, on the quantity of sea water that is inletted in the containers.

It should also be noted that the mechanic structures contrived in the state of the art to convert the hydro-mechanical energy associated to wave motion are anyhow always characterized by a high complexity of the mechanisms, and in that the manufacturing and economic efforts to develop and enact them have never been repaid by proportional benefits in terms of quantity of produced energy. Document FR 2 334 840 discloses a system in which air is pumped into a tank under the movement of a first member and water is pumped into the same tank under the movement of a second member. A turbine with generator is driven by water from the tank. The pumping means tank and turbine are all provided under water.

In short, the cost/benefit ratio has never fully justified an effective and convenient implementation of such methods.

The technical problem underlying the present invention is to provide a modular system for the electric energy production allowing to overcome the drawbacks mentioned with reference to the known art.

Such a problem is solved by a system as specified above, having at least one module comprising:
* first means for pumping air driven by the motion of a respective first member subjected to said wave motion;
* second means for pumping water driven by the motion of a respective second member subjected to said wave motion; and
* at least one tank, having a first and a second variable-volume chamber partitioned by movable means for partitioning,
   wherein the air is pumped into said first chamber to a preset pressure value, the water is pumped in said second chamber so as to reduce the volume of said first chamber, there being provided means for extracting water under pressure from said second chamber and turbine means for electric energy production associated to said water under pressure;
said modular system being arranged in such a away that:
* said first member (5a) and said second member (5b) are substantially floating at the free atmospheric air-water interface, whereas
* said first means for pumping air;
* said second means for pumping water;
* said at least one tank (70);
* said means for extracting water; and
* said turbine means
are substantially above water.

The main advantage of the modular system according to the present invention lies in allowing to unbind the highly aleatory variable of the contingent intensity of wave motion from the power outputted by the system in terms of electric energy.

This is attained in the first instance via the introduction of a suitably implemented step of storing sea water and the option of adjusting the system according to actual needs, regardless of the contingent aspect of the intensity of wave motion.

Said result is attained also by virtue of an advantageous design of the present invention according to a modular conception.

In fact, the invention can be composed of plural modules, each operative *per se* and incorporating the totality of the functionalities of the system.

Each module is structured so as to be conveniently incorporated and joined to other modules, or isolated and detached therefrom.

The modularity thus conceived allows a proportional powering-up or depowering of the system as a whole, so as to adjust the energy output capacity thereof.

Thus, the quantity of produced energy is directly related not to the aleatory wave motion pattern, but to the actual users' demand and to the needs, even provisional or occasional ones, of the catchment area served.

Moreover, the present invention allows an economically convenient and ecologically compatible exploiting of the hydro-mechanical energy from the unceasing motion of sea and ocean waves.

The conversion of the mentioned form of energy into electric energy occurs according to modes respecting the environment.

In fact, no pollutant is present at any level of the installations needed to implement the system.

In addition thereto, the installations for the mechanical collection and the hydroelectric conversion of energy from waves are relatively simple and comprise a limited number of components whose uncomplicated manufacture generally does not envisage high expenses.

In particular, said installations entail no additional costs apart from those represented by the initial investment for their fitting up and the subsequent inspecting and servicing interventions thereto.

Other advantages, features and the modes of employ of the present invention will be made evident by the following description of an embodiment thereof, given by way of example and not for limitative purposes.

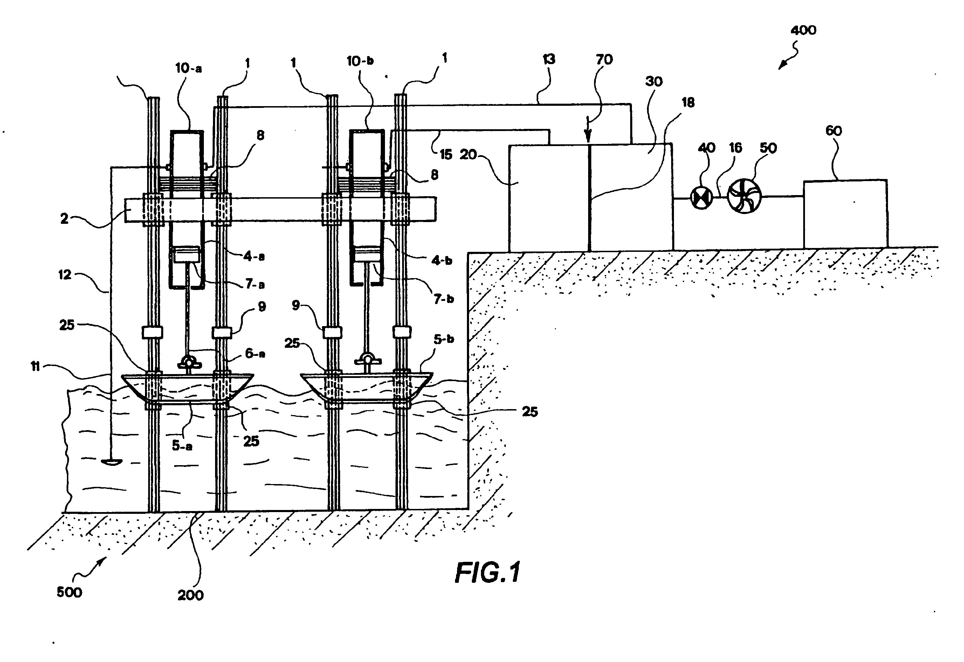

Reference will be made to the drawings of the annexed figure 1, in which it is reported a schematization of the system for the electric energy production according to the present invention in the minimal modular configuration thereof.

Said figure illustrates the connection of all the apparatuses and units of the system.

Therefore, with reference to figure 1, the system is composed of plural units and members; in particular, the component units thereof are located partly at sea, above-surface as well as in-depth, and partly on dry land, preferably near to the shore.

A piping network connects said units 500 located at sea 100 to said units 400 fitted up on dry land.

At sea, each unit rests on a fixed portion, e.g., piling-shaped. Such a fixed portion comprises a plurality of vertical piles 1 anchored onto the seabed 200 with different modes, e.g., driven or drilled.

Said piles 1 can be made with different materials, e.g., of steel or reinforced concrete.

In the embodiment described here, the piles I are arranged in pairs, adequately spaced to form a linear sequence.

Depending on the intensity of the wave motion typical of a certain area, recordable via *ad hoc* measuring of average statistical values representative of the extent of the forces developed by the waves, the piles 1 are suitably secured to the seabed 200 and adequately dimensioned during design.

One or more platforms 2, of a width such as to cover the entire module located at sea or each single pair of piles 1, engage, via suitable means for coupling, onto the piles 1 themselves. Optionally, said piles may also be propped on the adjacent dry land, to bring about maximum stability.

With respect to the platforms 2, said piles operate as means for restraining and blocking under normal operating conditions of the modular system for the electric energy production and as sliding guide when managing critical conditions on the sea surface, respectively.

In the platforms 2 anchored to the piles 1 there are incorporated, integrally thereto, cylinders 4 having respective hollows acting as compression chambers 10.

A plurality of floating members 5a, 5b are slidably mounted on said piles 1 by guide members 25, the configuration being such that each floating member 5a, 5b of said plurality is mounted on respective pairs of piles 1, two by two, so that each floating member is guided by four piles.

Such floating members 5 are them also floating bodies, in the form, e.g., of buoys or reinforced-shell structures and, thanks to related sliding guide means like suitable grooves and guides formed in said piles 1, they are free to translate vertically.

Thus, the floating members 5a, 5b are subjected to wave motion and rise or sink with a linear motion concordantly to the pattern of the incoming wave. Moreover, it is understood that said floating members may optionally be replaced by different members subjected to wave motion capable of carrying out the same function, as it will be made apparent hereinafter.

The floating members 5a, 5b are connected to respective stems 6a, 6b of as many pistons 7a, 7b moving within the hollow of said cylinders 4a, 4b in a cylinder-piston system configuration. The motion of said pistons varies the volume of the compression chambers 10, causing a pumping effect.

The connection of the stems 6a, 6b to the floating members 5a, 5b is made by resorting to means for connecting, enabling the stems to second the trim of the floating members and to adapt to the different viable configurations resulting from the pattern of the wave motion.

In fact, the floating members 5a, 5b should be free to rock and swing, in order to follow the wave motion pattern.

The means for connecting between said stems 6a, 6b and said floating members 5a, 5b may be, e.g., suitable hinges formed onto the foot of the stems and apt to be received on seats prearranged on the floating members, or an eyelet, at the end of the stems, through which a connecting gudgeon pin is passed, or with a volute shape.

Apparently, the pistons 7 are provided with a vertical reciprocating motion proportional to the wave motion and function of the wave thrust.

The relative motion of the pistons 7 inside the cylinders 4a and 4b, integral to the fixed platforms 2, is ensured by the motion of the floating members 5a, 5b, responding to the pattern of the wave motion onto the sea surface with proportional upward or downward displacements.

The piles 1 are equipped with suitable safety stops so that, in the presence of anomalous waves or extreme conditions, e.g., of a storm, the functionality of the system is not compromised and there ensue no breaking due to excessive violence of the hydro-mechanical forces carried by the wave motion on the floating members.

For this purpose, the safety stops 9, apt to prevent structural breaking of the modular system for the electric energy production according to the present invention, are advantageously located on the piles 1, at a certain height above sea level depending on the stroke on the latter. The safety stops 9 cooperate with said guide members 25.

The cylinders 4a, 4b may be rocking, in order to better dampen anomalous waves.

Basically, when the floating members 5a and 5b receive an excessive thrust due to anomalous waves, the stops placed on the piles block the floating members at the desired height.

A piping network connects the compression chambers 10, obtained on the cylinders 4 by means of the pistons 7, in the first instance to the external environment and then, in the second instance, depending on whether the fluid discharged under pressure be air or water, to respective chambers 20 or 30. Such chambers are part of an accumulation tank 70 closed, i.e., sealed by atmospheric pressure, located on dry land.

In fact, the ducts of the mentioned piping serve, in the first instance, to intake fluid from one of their ends and to inlet it into the compression chamber 10 inside the cylinders 4, then to transfer and pour it under pressure into suitable and respective chambers 20 or 30 depending on the liquid or gaseous nature of the fluid.

In this regard, it should be stressed that the present invention has the merit of being articulable in modules, each one comprising at least one first cylinder 4a, in its compression chamber 10a there being intaken sea water from the ocean, and at least one second cylinder 4b, in its compression chamber 10b there being intaken air from the atmosphere. Each module serves at least one tank 70.

As mentioned hereto, air and water are poured under pressure inside a first and a second chamber 20 and 30, respectively, of the tank 70 located near to the shore.

Said chambers 20, 30 have each variable volume, being partitioned by movable means for partitioning that, in the present embodiment, have a flexible and deformable diaphragm 18.

The second chamber 30 for accumulating water under pressure is in turn connected, via a further piping length 16, to means 40 for adjusting/reducing the delivery.

Such means 40 for adjusting/reducing the delivery can consist in an on-off member or valve capable, besides of expanding the water flow to partially reduce its pressure, of sealing the passage between the external offtake of the duct 16 and the inlet of the guide blades of a hydraulic turbine 50 located downstream thereto.

The hydraulic turbine 50, located inside a hydroelectric power plant, is connected in a *per se* conventional manner to an electric generator 60, arranged beforehand for the electric energy production and equipped with the related protection, command and control apparatuses.

The steps in which the operation of the system can be divided into envisage that air be preventively intaken from atmosphere via the intake inlet 14, compressed by the piston 7-b thanks to the action of the wave motion and delivered, via a dedicated section 15 of the feed piping network, into the chamber 20.

Therefore, such a chamber is preliminarily filled with compressed air and the diaphragm 18 is subjected to a pre-tensioning, even prior to the pumping, likewise thanks to wave motion, of sea water in the chamber 30.

Therefore, the first piston-cylinder system comprising the first cylinder 4b constitutes first means for pumping air.

Therefore, the second piston-cylinder system comprising the second cylinder 4a constitutes second means for pumping water.

Owing to the vertical reciprocating oscillating motion induced by wave motion and transmitted from the floating member 5 via the stem 6, the piston 7-b in the cylinder 4-b intakes air from the termination 14 of the piping network, inletting it in the compression chamber 10-b.

With the swelling of the sea, the air thus inletted is compressed by the piston 7-b, upon closure of the valve on the inlet duct, as well as of a further valve, e.g. a check valve, on the delivery duct 15.

The air, thus compressed by the piston 7-b and upon opening the valve for access to the duct 13, is piped under pressure in said piping length 15, to then be discharged in the accumulation tank 20 to bring about a predetermined pressure.

Then, with the same underlying mechanism, water is intaken from sea via the immersed intake inlet 11.

Then, this introduced sea water is pumped by the piston and delivered to a dedicated feed network 13.

Thanks to a valve opening/closing play alike that described above, the intaken water is stored under pressure in the accumulation tank 20.

The two accumulation chambers 20 and 30 are inlet-adjusted by valves. It is understood that an automated control system could govern the opening and closing of all valves.

As mentioned hereto, said chambers 20, 30 share a wall made of an elastic, flexible and deformable diaphragm 18.

Owing to the abovedescribed steps, the air in the chamber 20, already preventively delivered under pressure, is further compressed via the introduction of sea water in the chamber 30, generating a balance configuration with the deformed diaphragm 18.

The two chambers operate according to the same principle of an autoclave, so that when pressure detecting devices signal the reaching of a certain maximum pressure level thereinside, the inletting of water in the respective chamber 30 is suspended, with a relative closure of the inlet valves; on the other hand, at the outlet of the chamber 30 means 40 for reducing the delivery is opened, to allow the expansion of the water accumulated until then.

There ensues an overpressure in the compressed air chamber 20, and this causes an imbalance at the level of the diaphragm 18, with an entailed deformation thereof in a sense opposite to the one previously intervened.

The water is thus expelled out of the chamber 30 into the delivery duct 16, until, due to the increased volume of the chamber 20 consequent to the expansion of the diaphragm 18, a balance between the pressures of the two portions of the diaphragm 18 is re-established.

At the onset of this balancing of pressures said delivery (discharge) reducing means 40 is closed again and the cycle detailed above is repeated.

Thus, in the tanks 70 sea water under pressure is stored, ready to be then released to generate electric energy according to needs, with the selective and adjusted opening of the flow rate adjusting means 40 on all, some or only one of the tanks 70 served by each of the modules.

The valves and the seal couplings of the system are capable of intervening under any operating condition, and in particular of closing the ducts and adjusting the fluid flows according to the demands and needs that are expressed by the distribution network downstream.

They can operate automatically or be controlled by a central unit to which they convey the related measuring of the pressure detecting devices.

As highlighted hereto, the modularity with which the system according to the present invention is implemented, entails, besides the inherent rapidity of coming into service in case of sudden needs of the electric network, also other merits such as the flexibility, i.e., the ability to follow the rapidly changing pattern of the load in peak periods, the high availability, the continuity and the safety of the electric energy production service.

Likewise, it should further be highlighted that the wave motion is by definition a renewable energy source.

To the abovedescribed modular system for the electric energy production a person skilled in the art, in order to satisfy further and contingent needs, may effect several further modifications and variants, all however falling within the protective scope of the present invention, as defined by the appended claims.

## Claims

1. A modular system for the electric energy production exploiting wave motion for the pumping of fluids under pressure, having at least one module comprising:
* first means for pumping air driven by the motion of a respective first member (5a) subjected to said wave motion;
* second means for pumping water driven by the motion of a respective second member (5b) subjected to said wave motion (5b); and
* at least one tank (70), having a first (20) and a second (30) variable-volume chamber (30) partitioned by movable means (18) for partitioning,
wherein the air is pumped in said first chamber (20) to a preset pressure value, the water is pumped in said second chamber (30) so as to reduce the volume of said first chamber (20), there being provided means for extracting water under pressure from said second chamber (30) and turbine means for the electric energy production associated to said water under pressure,
said modular system being arranged in such a away that:
* said first member (5a) and said second member (5b) are substantially floating at the free atmospheric air-water interface, whereas
* said first means for pumping air;
* said second means for pumping water;
* said at least one tank (70);
* said means for extracting water; and
* said turbine means
are substantially above water.

2. The modular system for the electric energy production according to claim 1, wherein said first and second means for pumping air and water have a respective piston-cylinder system, comprising a piston (7a, 7b) housed in the hollow of a cylinder (4a, 4b) and moved by a stem (6a, 6b) driven by said members subjected to the wave motion (5a, 5b).

3. The modular system for the electric energy production according to any one of die preceding claims, comprising a piping network for the intake, the transfer and the delivery under pressure of said fluids in said tanks (70).

4. The modular system for the electric energy production according to claim 3, wherein said piping network comprises sealing means for adjusting the discharge of the fluids and in particular comprises, at the outlet of said second chamber (30) of said tank (70), means (40) for expanding and adjusting the delivery of the water contained in the second chamber (30).

5. The modular system for the electric energy production according to claim 1, wherein said movable means (18) for partitioning is a deformable and flexible diaphragm.

6. The modular system for the electric energy production according to any one of the preceding claims, wherein the cylinders (4) of said means for pumping are integral to fixed platforms (2).

7. The modular system for the electric energy production according to the preceding claim, wherein said fixed platforms (2) have means for restraining and blocking comprising a plurality of fixed piles (1).

8. The modular system for the electric energy production according to claim 7, wherein said floating members (5a, 5b) are slidably engaged on said plurality of piles (1).

9. The modular system for the electric energy production according to one of the claims 6 to 8, wherein said piles (1) comprise safety systems (9) for the temporary disengagement and the vertical sliding of said fixed platforms (2) from the piles (1).

10. The modular system for the electric energy production according to any one of the claims 2 to 9, comprising means for connecting between said stems (6a,6b) and said floating members (5a, 5b) apt to second the trim of said floating members (5a, 5b).

## Patentansprüche

1. Modulares System zur Elektroenergieerzeugung unter Ausnutzung von Wellenbewegung zum Pumpen von Fluids unter Druck, das wenigstens ein Modul aufweist, das umfasst:
- erste Einrichtungen zum Pumpen von Luft, angetrieben durch die Bewegung eines jeweiligen ersten Elements (5a), das der Wellenbewegung ausgesetzt ist,
- zweite Einrichtungen zum Pumpen von Wasser, angetrieben durch die Bewegung eines jeweiligen zweiten Elements (5b), das der Wellenbewegung (5b) ausgesetzt ist, und
- wenigstens einen Behälter (70) mit einer ersten (20) und einer zweiten (30) Kammer (30) variablen Volumens, aufgeteilt durch eine bewegliche Einrichtung (18) zum Aufteilen,
wobei die Luft in der ersten Kammer (20) auf einen voreingestellten Druckwert gepumpt wird, das Wasser so in die zweite Kammer (30) gepumpt wird, um das Volumen der ersten Kammer (20) zu verringern, Einrichtungen zum Absaugen von Wasser unter Druck aus der zweiten Kammer (30) und Turbineneinrichtungen zur Elektroenergieerzeugung, verbunden mit dem unter Druck stehenden Wasser, bereitgestellt sind
und wobei das modulare System derartig eingerichtet ist, dass
- das erste Element (5a) und das zweite Element (5b) im Wesentlichen an der freien atmosphärischen Luft-Wasser-Grenzfläche schwimmen, wohingegen
- die ersten Einrichtungen zum Pumpen von Luft,
- die zweiten Einrichtungen zum Pumpen von Wasser,
- der wenigstens eine Behälter (70),
- die Einrichtungen zum Absaugen von Wasser und
- die Turbineneinrichtungen
im Wesentlichen über Wasser sind.

2. Modulares System zur Elektroenergieerzeugung nach Anspruch 1, wobei die ersten und die zweiten Einrichtung zum Pumpen von Luft und Wasser ein jeweiliges Kolbenzylindersystem aufweisen, das einen Kolben (7a, 7b) umfasst, aufgenommen in den Hohlraum eines Zylinders (4a, 4b) und durch einen Schaft (6a, 6b) bewegt, der durch die Elemente, die der Wellenbewegung (5a, 5b) ausgesetzt sind, angetrieben wird.

3. Modulares System zur Elektroenergieerzeugung nach einem der vorhergehenden Ansprüche, das ein Rohrnetz zum Ansaugen, zum Weiterleiten und zum Zuführen der Fluids unter Druck in die Behälter (70) umfasst.

4. Modulares System zur Elektroenergieerzeugung nach Anspruch 3, wobei das Rohrnetz Dichtungseinrichtungen zum Regeln des Ableitens der Fluids umfasst und insbesondere an dem Auslass der zweiten Kammer (30) des Behälters (70) Einrichtungen zum Aufweiten und Einstellen der Zuführung des in der zweiten Kammer (30) enthaltenen Wassers umfasst.

5. Modulares System zur Elektroenergieerzeugung nach Anspruch 1, wobei die bewegliche Einrichtung (18) zum Aufteilen eine verformbare und flexible Membran ist.

6. Modulares System zur Elektroenergieerzeugung nach einem der vorhergehenden Ansprüche, wobei die Zylinder (4) der Einrichtungen zum Pumpen integral mit feststehenden Plattformen (2) sind.

7. Modulares System zur Elektroenergieerzeugung nach dem vorhergehenden Anspruch, wobei die feststehenden Plattformen (2) Einrichtungen zum Halten und Arretieren haben, die eine Vielzahl von feststehenden Pfählen (1) umfassen.

8. Modulares System zur Elektroenergieerzeugung nach Anspruch 7, wobei die schwimmenden Elemente (5a, 5b) verschiebbar auf der Vielzahl von Pfählen (1) eingerückt sind.

9. Modulares System zur Elektroenergieerzeugung nach einem der Ansprüche 6 bis 8, wobei die Pfähle (1) Sicherheitssysteme (9) zum vorübergehenden Ausrücken und für das vertikale Schieben der feststehenden Plattformen (2) von den Pfählen (1) aufweisen.

10. Modulares System zur Elektroenergieerzeugung nach einem der Ansprüche 2 bis 9, das Einrichtungen zum Verbinden zwischen den Schäften (6a, 6b) und den schwimmenden Elementen (5a, 5b) umfasst, die geeignet sind, um die Trimmung der schwimmenden Elemente (5a, 5b) zu unterstützen.

## Revendications

1. Système modulaire pour la production d'énergie électrique exploitant le mouvement des vagues pour le pompage de fluides sous pression, avec au moins un module comprenant :
- des premiers moyens pour pomper l'air entraîné par le mouvement d'un premier élément respectif (5a) soumis audit mouvement des vagues ;
- des seconds moyens pour pomper l'eau entraînée par le mouvement d'un second élément respectif (5b) soumis audit mouvement ondulatoire (5b) ; et
- au moins un réservoir (70) avec une première chambre à volume variable (20) et une seconde chambre à volume variable (30) séparées par des moyens mobiles (18) pour le cloisonnement,
dans lequel l'air est pompé dans ladite première chambre (20) à une valeur de pression préétablie, l'eau est pompée dans ladite seconde chambre (30) de façon à réduire le volume de ladite première chambre (20), des moyens étant prévus pour extraire l'eau sous pression à partir de ladite seconde chambre (30) et des moyens de turbine pour la production d'énergie électrique associée à ladite eau sous pression,
ledit système modulaire étant disposé de telle sorte que :
- ledit premier membre (5a) et ledit second membre (5b) sont sensiblement flottants au niveau de l'interface eau-air atmosphérique libre, tandis que
- lesdits premiers moyens pour le pompage de l'air;
- lesdits seconds moyens pour le pompage de l'eau ;
- ledit au moins un réservoir (70) ;
- lesdits moyens pour extraire l'eau ; et
- lesdits moyens de turbine
sont sensiblement au-dessus de l'eau.

2. Système modulaire pour la production d'énergie électrique selon la revendication 1, dans lequel lesdits premiers et seconds moyens pour le pompage de l'air et de l'eau ont un système respectif piston-cylindre, comprenant un piston (7a, 7b) logé dans le creux d'un cylindre (4a, 4b) et déplacé par une tige (6a, 6b) entraînée par lesdits éléments soumis au mouvement des vagues (5a, 5b).

3. Système modulaire pour la production d'énergie électrique selon l'une quelconque des revendications précédentes, comprenant un réseau de tuyauterie pour l'admission, le transfert et la distribution sous pression desdits fluides dans lesdits réservoirs (70).

4. Système modulaire pour la production d'énergie électrique selon la revendication 3, dans lequel ledit réseau de pompage comprend des moyens d'étanchéité pour ajuster la décharge des fluides et, en particulier, il comprend, à la sortie de ladite seconde chambre (30) dudit réservoir (70), des moyens (40) pour étendre et ajuster la délivrance de l'eau contenue dans la seconde chambre (30).

5. Système modulaire pour la production d'énergie électrique selon la revendication 1, dans lequel lesdits moyens mobiles (18) pour le cloisonnement consistent en une membrane déformable et souple.

6. Système modulaire pour la production d'énergie électrique selon l'une quelconque des revendications précédentes, dans lequel les cylindres (4) desdits moyens pour le pompage sont solidaires de plates-formes fixes (2).

7. Système modulaire pour la production d'énergie électrique selon la revendication précédente, dans lequel lesdits plates-formes fixes (2) comportent des moyens de retenue et de blocage comprennant une pluralité de poteaux fixes (1).

8. Système modulaire pour la production d'énergie électrique selon la revendication 7, dans lequel lesdits éléments flottants (5a, 5b) sont engagés de façon coulissante sur ladite pluralité de poteaux (1).

9. Système modulaire pour la production d'énergie électrique selon l'une des revendications 6 à 8, dans lequel lesdits poteaux (1) comprennent des systèmes de sécurité (9) pour le désengagement provisoire et le coulissement vertical desdits plates-formes fixes (2) à partir des poteaux (1).

10. Système modulaire pour la production d'énergie électrique selon l'une quelconque des revendications 2 à 9, comprenant des moyens pour le raccordement entre lesdites tiges (6a, 6b) et lesdits éléments flottants (5a, 5b) aptes à faciliter l'ajustement desdits éléments flottants (5a, 5b).
